# EUROPÄISCHE PATENTANMELDUNG

(11) **EP 2 713 024 A1**
(43) Veröffentlichungstag der Anmeldung: **02.04.2014**
(21) Anmeldenummer: 13004470.4
(22) Anmeldetag: 13.09.2013
(51) Int. Cl.: F02B 19/10, F02B 19/12, F02B 19/16

(54) **Vorkammersystem für eine Brennkraftmaschine**

(30) Priorität: 26.09.2012 AT 10482012
(71) Anmelder: GE Jenbacher GmbH & Co OG, 6200 Jenbach (AT)
(72) Erfinder: Gruber, Friedrich, 6283 Hippach (AT)
(74) Vertreter: Gangl, Markus

(57) **Zusammenfassung**

Vorkammersystem für eine Brennkraftmaschine, insbesondere für einen Gasmotor, mit einem Vorkammervolumen (4), in dem ein zündfähiges Brennstoff-Luft-Gemisch - insbesondere durch eine am Vorkammersystem (1) anordenbare Zündvorrichtung (6) - entflammbar ist, wobei das Vorkammersystem (1) mit einem Überströmkanal (5) ausgestattet ist, durch den das Vorkammervolumen (4) mit einem Hauptbrennraum (10) der Brennkraftmaschine (18) verbindbar ist, wobei das Vorkammervolumen (4) einen Zündbereich (3) und einen durch eine Zwischenwand (9) zumindest abschnittsweise vom Zündbereich (3) abgegrenzten Überströmbereich (2) umfasst, wobei im Zündbereich (3) das Treibstoff-Luft-Gemisch entflammbar ist und der Überströmkanal (5) in den Überströmbereich (2) mündet, und dass eine Luftzufuhrleitung (8) vorgesehen ist, wobei dem Überströmbereich (2) über die Luftzufuhrleitung (8) - vorzugsweise verdichtete - Luft zuführbar ist.

## Beschreibung

Die vorliegende Erfindung betrifft ein Vorkammersystem für eine Brennkraftmaschine nach Anspruch 1, sowie eine Brennkraftmaschine mit einem derartigen Vorkammersystem.

Beim Betreiben einer Brennkraftmaschine - insbesondere eines Gasmotors - mit im Wesentlichen stöchiometrischen Verhältnis von Brennstoff und Luft können sehr hohe Temperaturen auftreten, was dem Abgasverhalten eines solchen Motors abträglich ist. Diesem Sachverhalt kann durch eine Abgasrückführung entgegengewirkt werden. Dies führt jedoch zu einer Verschlechterung des Zündverhaltens.

In diesem Falle eine mit Brenngas zu füllende Vorkammer zur Zündung zu verwenden, wie dies bei großvolumigen Magermotoren standardmäßig gelöst wird, ist zunächst problematisch. Denn das Gemisch, das beim Komprimieren aus dem Hauptbrennraum in die Vorkammer gedrückt wird, weist ja keinen Luftüberschuss auf, wodurch sich in der Vorkammer kein gut zündbares Brennstoff-Luft-Gemisch einstellt.

In der DE 35 06 217 A1 wird dieses Problem dadurch umgangen, dass der Vorkammer bereits ein nah-stöchiometrisch gemischtes Brenngas zugeführt wird. Nachteilig ist hierbei neben dem erhöhten konstruktiven Aufwand, dass bei einer Abnützung des Einspritzventils der Vorkammer die Möglichkeit der Rückzündung des Vorkammergemisches bis in die Versorgungskanäle besteht. Dies stellt ein Sicherheitsrisiko da, das es zu vermeiden gilt.

Die Aufgabe der vorliegenden Erfindung besteht darin, ein Vorkammersystem bereitzustellen, das auch beim stöchiometrischen Betrieb eines großvolumigen Motors mit substanzieller Abgasrückführung ein gutes Zünden des Brennstoff-Luftgemisches in der Vorkammer erlaubt ohne gleichzeitig ein Sicherheitsrisiko durch Vorhandensein von zündfähigem Brennstoff-Luft-Gemisch außerhalb der Brennkammern einzuführen.

Diese Aufgabe wird durch ein Vorkammersystem mit den Merkmalen des Anspruchs 1 bzw. mit einer Brennkraftmaschine mit einem derartigen Vorkammersystem gelöst.

Durch die Teilung des Vorkammervolumens in einen Zündbereich und ein durch eine Zwischenwand vom Zündbereich zumindest teilweise abgetrennten Überströmbereich sowie durch Einbringen von Luft durch die Luftzufuhrleitung in den Überströmbereich wird erreicht, dass während der Kompressionsphase ein Minimum an abgashaltigem Brenngemisch aus der Hauptbrennkammer in den Zündbereich gelangt. Gleichzeitig drückt dieses Hauptkammergas die durch die Luftzufuhrleitung eingebrachte Luft in den Zündbereich, wodurch dort ein gut zündfähiges Gemisch entsteht. Auf diese Weise kann im Zündbereich der Vorkammer ein Lambda-Wert von 0,8 bis 1,2 erzielt werden, wobei der Lambda-Wert sich auf das Verhältnis von Luft zu Brennstoff bezieht und der Lambda-Wert 1 das ideale, also stöchiometrische, Verhältnis darstellt.

In der DE 10 2008 062 574 A1 wird eine Zündkerze für eine Brennkraftmaschine offengelegt, die über einen Hinterkammervolumenbereich verfügt, wobei dieser Hinterkammervolumenbereich einen Brennraumseitigen Endbereich der Zündkerze zumindest teilweise umgibt. Dies dient aber lediglich der Volumenvergrößerung der Vorkammer und löst die vorliegende Aufgabe nicht. Denn durch die Abwesenheit einer Zwischenwand wird nicht verhindert, dass das Gemisch aus dem Hauptbrennraum beim Komprimieren zum Zündbereich gelangt.

Weitere vorteilhafte Ausführungsformen der Erfindung sind in den abhängigen Ansprüchen definiert.

Um der durch die Zündung in der Vorkammer erzeugten Zündflamme das Erreichen der Hauptbrennkammer zu erleichtern, kann in der Zwischenwand ein Verbindungskanal ausgebildet sein, wobei der Verbindungskanal den Zündbereich mit dem Überströmbereich verbindet.

Um eine gleichmäßige Kühlung der gesamten Vorkammer durch die eingeblasene Luft zu erreichen, kann es vorgesehen sein, dass die Zwischenwand in Bezug auf eine Längsachse des Vorkammersystems im Wesentlichen umlaufend ausgebildet ist, wobei der Überströmbereich den Zündbereich - getrennt durch die umlaufende Zwischenwand - im Wesentlichen umgibt.

Bevorzugt ist eine Ausführungsform, bei der über die Luftzufuhrleitung eine - vorzugsweise gekühlte - Ladeluft der Brennkraftmaschine und/oder eine - vorzugsweise auf 6 bar bis 10 bar verdichtete - Pressluft in den Überströmbereich einbringbar ist. Dies ist der effektiven Fernhaltung des abgashaltigen Gemisches vom Zündbereich weiter zuträglich.

Aus energetischen Gründen kann in diesem Fall vorgesehen sein zuerst Ladeluft, welche typischerweise mit einem Druck von 2 bar bis 3 bar aus einem Turbolader zur Verfügung steht, zuzuführen und anschließend, sobald der Druck in der Vorkammer den Druck der Ladeluft übersteigt, Pressluft zuzuführen.

Für eine präzise Steuerung oder Regelung des Zeitraums der Luftzufuhr bzw. der Menge an zugeführter Luft kann es vorgesehen sein, dass an der Luftzufuhrleitung ein Ventil angeordnet ist, welches vorzugsweise elektronisch ausgebildet ist.

Für die optimale Ausbreitung der zugeführten Luft kann es vorgesehen sein, dass im Überströmbereich in Bezug auf eine Längsachse des Vorkammersystems ein umlaufender Ringkanal ausgebildet ist, wobei vorzugsweise die Luftzufuhrleitung in den Ringkanal mündet. Um ein walzenartiges Einströmen der Luft zu ermöglichen, kann hierbei zwischen dem Ringkanal und dem Rest des Überströmbereichs ein umlaufender Ringspalt ausgebildet sein, wobei radial bezüglich der Längsachse betrachtet der Ringkanal eine Ringkanalbreite und der Ringspalt eine Ringspaltbreite aufweist, wobei vorzugsweise die Ringspaltbreite kleiner als die Ringkanalbreite ist.

Damit ein genügend großes Volumen zum Druckausgleich zur Verfügung steht, kann ein Überströmvolumen des Überströmbereichs größer als ein Zündvolumen des Zündbereichs ausgebildet sein.

Es kann vorgesehen sein, dass der Verbindungskanal eine Verbindungskanalöffnung aufweist, wobei die Verbindungskanalöffnung in den Überströmbereich mündet. Da es strömungsmechanisch vorteilhaft ist, ist besonders bevorzugt vorgesehen, dass in Bezug auf eine Längsachse des Vorkammersystems ausgehend von der Verbindungskanalöffnung ein dem Zündbereich abgewandtes Teilvolumen des Überströmbereichs kleiner ist als das restliche Restvolumen des Überströmbereichs.

Um einen besonders gerichteten Austritt der Strömung zu erreichen, kann das Verhältnis eines Kanaldurchmessers des Überströmkanals zu einer Kanallänge des Überströmkanals maximal 0,25 betragen. So kann es sowohl vorgesehen sein, dass der Überstömkanal des Vorkammersystems bezüglich der Längsachse schräg verlaufend ausgebildet ist, als auch dass der Überströmkanal mit seiner in den Überströmbereich mündenden Überströmkanalöffnung im Wesentlichen tangential in Bezug auf eine Innenwandung des Vorkammersystems ausgebildet ist. Hierdurch weist die Strömung des durch die Kompression in die Vorkammer strömenden Brennstoff-Luftgemischs weg vom Zündvolumen der Vorkammer.

Um demgegenüber eine gerichtete Strömung der Zündflamme in den Überströmkanal zu garantieren, kann es vorgesehen sein, dass die Verbindungskanalöffnung - oder zumindest ein Teil ihres Querschnitts - in Richtung der Überströmkanalöffnung verläuft. Dabei kann insbesondere vorgesehen sein, dass nur ein Teil eines Querschnitts der Verbindungskanalöffnung in Richtung der Überströmkanalöffnung weist.

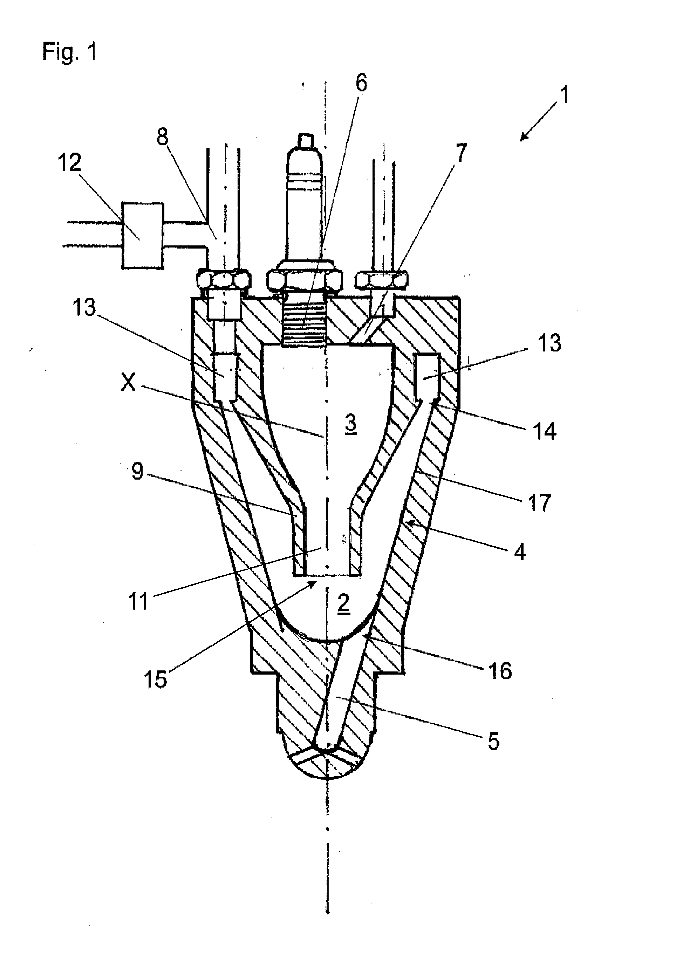

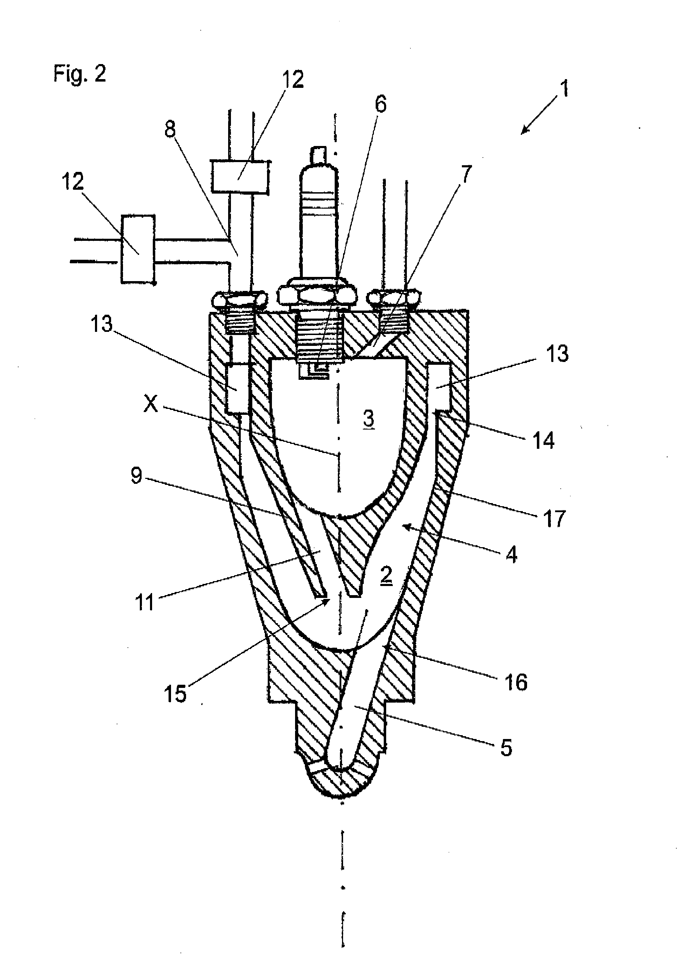

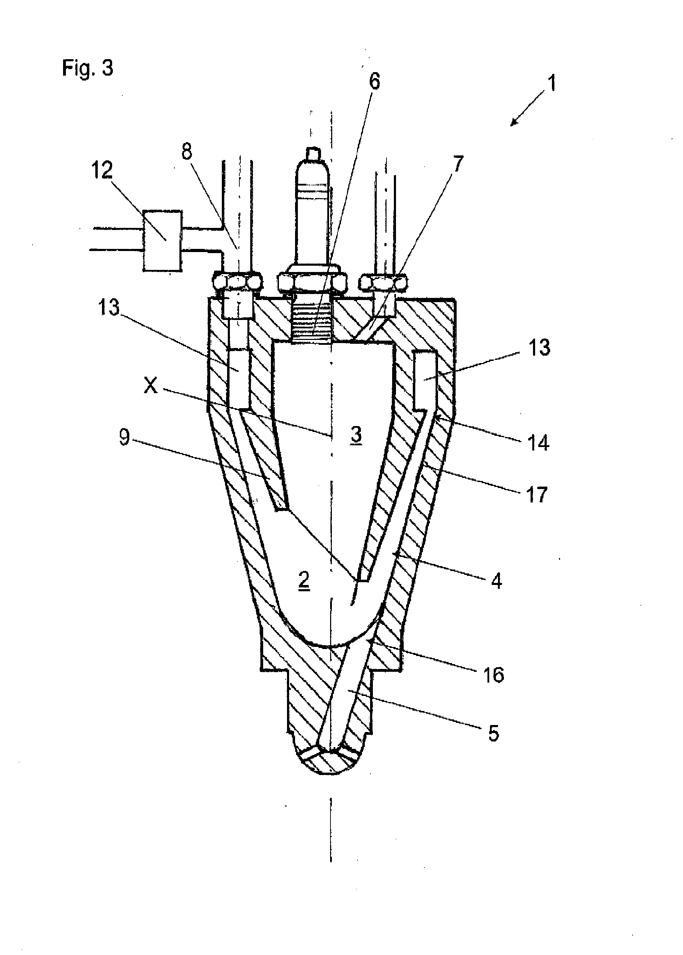

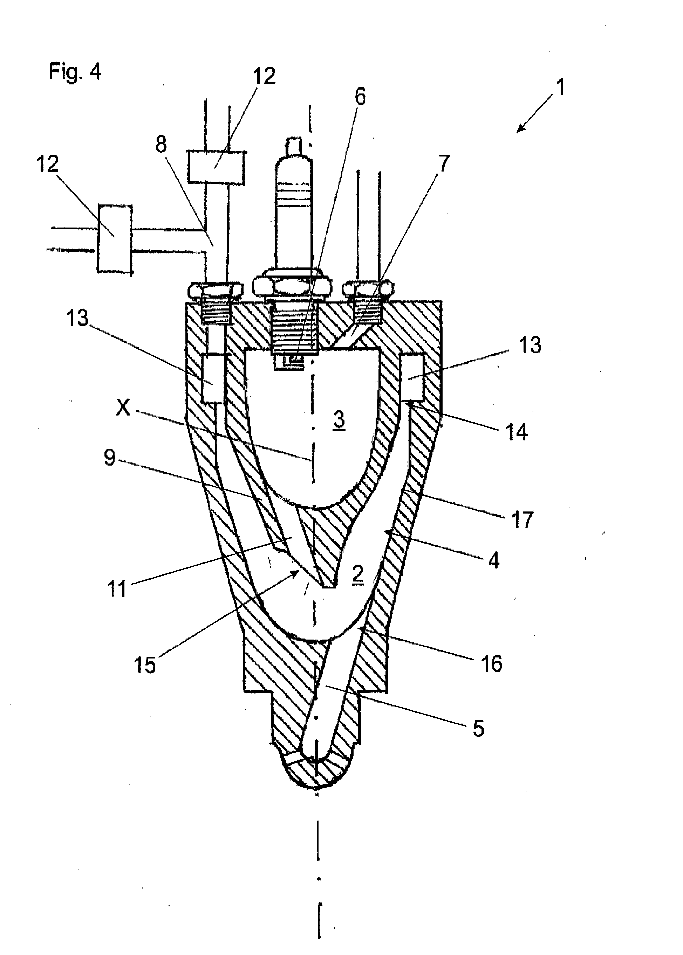

Weitere Vorteile und Einzelheiten der Erfindung ergeben sich anhand der Figuren sowie der dazugehörigen Figurenbeschreibung. Dabei zeigen die Figuren 1-4 Schnittdarstellungen verschiedener Ausführungen erfindungsgemäßer Vorkammersysteme.

In der Figur 1 sind zunächst das Vorkammervolumen 4 des Vorkammersystems 1, die Zündvorrichtung 6, der Überströmkanal 5 mit seiner Überströmkanalöffnung 16 sowie eine Brenngasleitung 7 zu erkennen. Der Überstömbereich 2 ist vom Zündbereich 3 durch eine Zwischenwand 9 abgegrenzt, wobei die beiden Bereiche durch den Verbindungskanal 11 mit einer Verbindungskanalöffnung 15 verbunden sind. Der Überströmkanal 5 ist hier tangential zur Innenwandung 17 geführt. Ein um die Längsachse X ringförmig ausgebildeter Ringkanal 3 ist über eine Ringspalt 14 mit dem Rest des Überströmbereichs 2 verbunden. In den Ringkanal 13 mündet die Luftzufuhrleitung 8, welche sowohl die Zufuhr von Ladeluft als auch die Zufuhr von Pressluft gestattet, wobei die Zufuhr von Pressluft mithilfe eines elektronischen Ventils 12 geregelt ist.

Figur 2 zeigt ein erfindungsgemäßes Vorkammersystem, bei dem auch der Verbindungskanal 11 bezüglich der Längsachse X schräg ausgeführt ist. Außerdem ist ein zweites elektronisches Ventil 12 vorhanden, das die Zufuhr von Ladeluft regelt.

Figur 3 zeigt eine Ausführungsform ohne Verbindungskanal 11.

Figur 4 zeigt eine Ausführungsform, welche der Figur 2 ähnlich ist, allerdings mit einer anderen Geometrie des Überströmkanals 11, insbesondere der überstömkanalöffnung 15.

Die vorliegende Erfindung ist nicht auf die obigen Ausführungsformen beschränkt. Beispielsweise kann der Überströmkanal zentral entlang der Längsachse ausgeführt werden. Dabei kann es von Vorteil sein, die Verbindungskanalöffnung von der Überströmkanalöffnung weg weisen zu lassen. Über die Brenngasleitung 7 könnte auch ein Gemisch, zum Beispiel mit einem Lambda-Wert von 0,3, zugeführt werden.

## Patentansprüche

1. Vorkammersystem für eine Brennkraftmaschine, insbesondere für einen Gasmotor, mit einem Vorkammervolumen (4), in dem ein zündfähiges Brennstoff-Luft-Gemisch - insbesondere durch eine am Vorkammersystem (1) anordenbare Zündvorrichtung (6) - entflammbar ist, wobei das Vorkammersystem (1) mit einem Überströmkanal (5) ausgestattet ist, durch den das Vorkammerrrolumen (4) mit einem Hauptbrennraum (10) der Brennkraftmaschine (18) verbindbar ist, **dadurch gekennzeichnet, dass** das Vorkammervolumen (4) einen Zündbereich (3) und einen durch eine Zwischenwand (9) zumindest abschnittsweise vom Zündbereich (3) abgegrenzten Überströmbereich (2) umfasst, wobei im Zündbereich (3) das Treibstoff-Luft-Gemisch entflammbar ist und der Überströmkanal (5) in den Überströmbereich (2) mündet, und dass eine Luftzufuhrleitung (8) vorgesehen ist, wobei dem Überströmbereich (2) über die Luftzufuhrleitung (8) - vorzugsweise verdichtete - Luft zuführbar ist.

2. Vorkammersystem nach Anspruch 1, **dadurch gekennzeichnet, dass** in der Zwischenwand (9) ein Verbindungskanal (11) ausgebildet ist, wobei der Verbindungskanal (11) den Zündbereich (3) mit dem Überströmbereich (2) verbindet.

3. Vorkammersystem nach Anspruch 1 oder 2, **dadurch gekennzeichnet, dass** die Zwischenwand (9) in Bezug auf eine Längsachse (X) des Vorkammersystems (1) im Wesentlichen umlaufend ausgebildet ist, wobei der Überströmbereich (2) den Zündbereich (3) - getrennt durch die umlaufende Zwischenwand (9) - im Wesentlichen umgibt.

4. Vorkammersystem nach wenigstens einem der Ansprüche 1 bis 3, **dadurch gekennzeichnet, dass** über die Luftzufuhrleitung (8) eine - vorzugsweise gekühlte - Ladeluft der Brennkraftmaschine (18) und/oder eine - vorzugsweise auf 6 bar bis 10 bar verdichtete - Pressluft in den Überströmbereich (2) einbringbar ist.

5. Vorkammersystem nach wenigstens einem der Ansprüche 1 bis 4, **dadurch gekennzeichnet, dass** zur Steuerung oder Regelung eines Zeitraums der Zuführung von Luft und/oder der Menge der zugeführten Luft in der Luftzufuhrleitung (8) ein, vorzugsweise elektronisches, Ventil (12) angeordnet ist.

6. Vorkammersystem nach wenigstens einem der Ansprüche 1 bis 5, **dadurch gekennzeichnet, dass** im Überströmbereich (2) in Bezug auf eine Längsachse (X) des Vorkammersystems (1) ein umlaufender Ringkanal (13) ausgebildet ist, wobei vorzugsweise die Luftzufuhrleitung (8) in den Ringkanal (13) mündet.

7. Vorkammersystem nach Anspruch 6, **dadurch gekennzeichnet, dass** zwischen dem Ringkanal (13) und dem Rest des Überströmbereichs (2) ein umlaufender Ringspalt (14) ausgebildet ist, wobei radial bezüglich der Längsachse (X) betrachtet der Ringkanal (13) eine Ringkanalbreite und der Ringspalt (14) eine Ringspaltbreite aufweist, wobei vorzugsweise die Ringspaltbreite kleiner als die Ringkanalbreite ist.

8. Vorkammersystem nach wenigstens einem der Ansprüche 1 bis 7, **dadurch gekennzeichnet, dass** ein Überströmvolumen des Überströmbereichs (2) größer als ein Zündvolumen des Zündbereichs (3) ausgebildet ist.

9. Vorkammersystem nach wenigstens einem der Ansprüche 1 bis 8, **dadurch gekennzeichnet, dass** der Verbindungskanal (11) eine Verbindungskanalöffnung (15) aufweist, wobei die Verbindungskanalöffnung (15) in den Überströmbereich (2) mündet.

10. Vorkammersystem nach wenigstens einem der Ansprüche 1 bis 9, **dadurch gekennzeichnet, dass** das Verhältnis eines Kanaldurchmessers des Überströmkanals (5) zu einer Kanallänge des Überströmkanals (5) maximal 0,25 beträgt.

11. Vorkammersystem nach wenigstens einem der Ansprüche 1 bis 10, **dadurch gekennzeichnet, dass** der Überströmkanal (5) des Vorkammersystems (1) bezüglich einer Längsachse (X) schräg verlaufend ausgebildet ist.

12. Vorkammersystem nach wenigstens einem der Ansprüche 1 bis 11, **dadurch gekennzeichnet, dass** der Überströmkanal (5) eine Überströmkanalöffnung (16) aufweist, wobei die Überströmkanaiöfmung (16) in den Überströmbereich (2) mündet.

13. Vorkammersystem nach Anspruch 12, **dadurch gekennzeichnet, dass** ausgehend vom Überströmkanal (5) die Überströmkanalöffnung (16) im Wesentlichen tangential in Bezug auf eine Innenwandung (17) des Vorkammersystems (1) in den Überströmbereich (2) einmündet.

14. Vorkammersystem nach wenigstens einem der Ansprüche 1 bis 13, **dadurch gekennzeichnet, dass** ausgehend vom Zündbereich (3) die Verbindungskanalöffnung (15) in Richtung der Überstromkanalöffnung (16) weist.

15. Brennkraftmaschine (18) mit einem Vorkammersystem (1) nach wenigstens einem der Ansprüche 1 bis 14.
